# EUROPÄISCHE PATENTSCHRIFT

(11) **EP 0 734 844 B1**
(45) Veröffentlichungstag und Bekanntmachung des Hinweises auf die Patenterteilung: **11.08.1999**
(21) Anmeldenummer: 96102045.0
(22) Anmeldetag: 13.02.1996
(51) Int. Cl.: B29D 31/508

(54) **Hohlform zur Herstellung einer Sandale**
Mould for manufacturing a sandal
Moule pour la production d'une sandale

(30) Priorität: 31.03.1995 DE 19511942
(43) Veröffentlichungstag der Anmeldung: 02.10.1996
(73) Patentinhaber: ALSA GmbH, D-36396 Steinau-Uerzell (DE)
(72) Erfinder: Herber, Karlheinz, D-36391 Sinntal (DE); Kohlhepp, Karl-Ernst, D-36381 Schlüchtern (DE)
(74) Vertreter: Schlagwein, Udo, Dipl.-Ing.

(56) Entgegenhaltungen:
- EP-A- 0 320 799
- AT-A- 386 110
- AU-B- 442 273
- DE-A- 3 242 586
- FR-A- 1 394 958
- US-A- 4 217 081
- US-A- 4 222 731

## Beschreibung

Die Erfindung geht aus von einer Hohlform zur Herstellung einer einen Schuhboden und eine daran befestigte Beriemung aufweisenden Sandale, wobei die Hohlform zu beiden Seiten der den Schuhboden bildenden Aushöhlung eine seitliche Tasche zur Aufnahme und Fixierung der Beriemung hat und welche Mittel zur Fixierung der Enden der Beriemung in den Taschen aufweist, so daß der in der Hohlform ausschäumende Kunststoff nicht außenseitig hinter die Beriemung gelangt.

Eine Hohlform der vorstehenden Art ist Gegenstand der AT-B-386 110. Bei der bekannten Hohlform werden die Enden der Beriemung durch Unterdruck und/oder durch Verwendung eines Haftklebers mit ihrer Außenseite in dichte Anlage an der jeweiligen Seitenwand der Form gehalten. Das Halten der Beriemung durch Unterdruck hat sich in der Praxis als sehr problematisch erwiesen. Um ausreichend hohe Haltekräfte zu erzielen, muß man mit relativ großen Unterdrücken arbeiten. Da der in die Hohlform eingegebene Kunststoff vor dem Ausschäumen sehr dünnflüssig ist, kommt es sehr häufig vor, daß Kunststoff in die Unterdruckkanäle gelangt, so daß die Hohlform und ihr Unterdrucksystem unerwünscht oft gereinigt werden müssen, was sehr zeitaufwendig ist.

Das Halten der Beriemung mittels eines Haftklebers erfordert nach dem Entnehmen der Sandale aus der Hohlform einen zusätzlichen Arbeitsgang, nämlich das Reinigen der Außenseite der Beriemung und das Entfernen von verbliebenem Haftkleber an den Seitenwänden der Hohlform. Beides stellt einen relativ großen Arbeitsaufwand dar, so daß gegenüber dem herkömmlichen Ankleben der Beriemung nach dem Herstellen des Schuhbodens kaum Herstellungszeit eingespart wird.

Wie die GB-A-1,191,832 zeigt, ist es auch schon bekannt, die Beriemung beim Herstellen des Schuhbodens derart in der hierzu benutzten Hohlform zu fixieren, daß der ausschäumende Kunststoff die unteren Bereiche der Beriemung allseitig umschließt. Die Beriemung dringt dann bei der fertigen Sandale in das Material des Schuhbodens ein und ist auf diese Weise ausreichend fest mit dem Schuhboden verbunden. Nachteilig bei solchen Sandalen ist jedoch das unbefriedigende Aussehen, da die Beriemung bei der fertigen Sandale nicht seitlich über den Schuhboden greift.

Der Erfindung liegt das Problem zugrunde, eine Hohlform der eingangs genannten Art zu entwickeln, welche in einem Arbeitsgang das Verbinden einer Beriemung mit einem Schuhboden ermöglicht, ohne daß hierzu die Hohlform aufwendig gestaltet und eine Nachbehandlung der Beriemung und/oder der Hohlform erforderlich werden.

Dieses Problem wird erfindungsgemäß dadurch gelöst, daß die Taschen in einem geringen Abstand zum Boden der Hohlform enden und einen zumindest an der Unterseite der Beriemung geringfügig über die Kontur der Beriemung greifenden Halterahmen für die Beriemung aufweisen.

Durch einen solchen Halterahmen wird ein Hochdrücken der Beriemung in den Taschen der Hohlform durch den ausschäumenden Kunststoff auf einfache Weise vermieden. Zugleich wird ausgeschlossen, daß Kunststoff zwischen die Außenseite der Beriemung und die Seitenwand der Hohlform gelangt. Die Fixierung der Beriemung in der Hohlform kann durch einfaches Einstecken der Enden der Beriemung in den Halterahmen erfolgen. Dabei bildet der über die Beriemung greifende Bereich des Halterahmens eine "Dichtung" für das ausschäumende Material. Die erfindungsgemäße Hohlform ermöglicht es, in einem einzigen Arbeitsgang einen Schuhboden mit Beriemung herzustellen, ohne daß anschließend die Beriemung auf ihrer Außenseite oder die Hohlform selbst von Kleber gesäubert werden muß und ohne daß der ausschäumende Kunststoff in Bereiche zu gelangen vermag, welche nach jedem Gießvorgang umständlich und zeitaufwendig gesäubert werden müssen.

Der erfindungsgemäße Halterahmen hat sich als so wirkungsvoll herausgestellt, daß es möglich ist, eine Beriemung ausschließlich durch den teilweise über die Kontur der Beriemung greifenden Halterahmen zu halten. Natürlich kann man zusätzlich vorsehen, daß die jeweilige Seitenwand der Hohlform im Bereich der Beriemung zurückspringt, so daß die Beriemung dann bei der fertigen Sandale seitlich über die Kontur der Beriemung ragt, wie das die eingangs genannte AT-B-386 110 zeigt.

Die Erfindung läßt verschiedene Ausführungsformen zu. Zur weiteren Verdeutlichung ihres Grundprinzips wird nachfolgend auf die Zeichnung Bezug genommen. Diese zeigt in
- Fig.1: eine Draufsicht auf einen Teilbereich eines Unterteils einer offenen Hohlform zur Erzeugung der Sandale,
- Fig.2: einen Querschnitt durch die Hohlform entlang der Linie II - II in Figur 1,
- Fig.3: einen Blick auf einen Seitenbereich des Inneren der Hohlform in Richtung eines Pfeiles III in Figur 1, im Maßstab stark vergrößert.

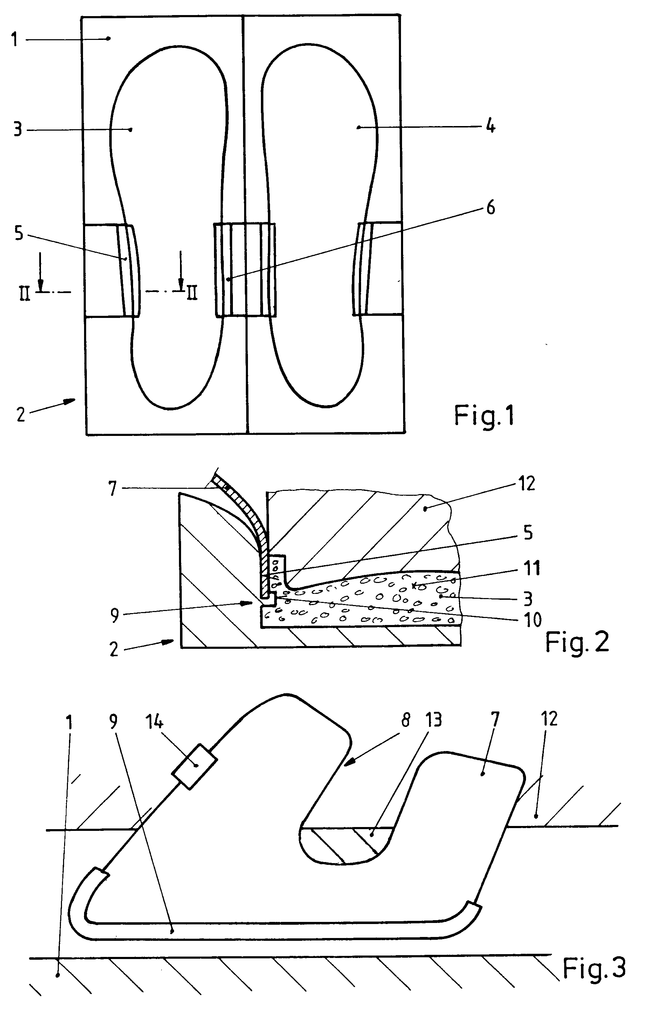

Die Figur 1 zeigt eine Unterform 1 einer Hohlform 2, welche entsprechend der Form einer rechten und linken Sandale entsprechende Aushöhlungen 3, 4 hat. Wie für die Aushöhlung 3 gezeigt, haben die Aushöhlungen 3, 4 an ihren beiden Längsseiten jeweils eine nach außen gerichtete Tasche 5, 6, in welche der untere Bereich einer in Figur 3 zu sehenden, aus zwei Seitenteilen 7 bestehenden Beriemung 8 einzusetzen ist.

Die Figur 2 zeigt für die Tasche 5, daß die Taschen 5, 6 im unteren Bereich einen Halterahmen 9 aufweisen, welcher mit einem schmalen Steg 10 innenseitig geringfügig über das Seitenteil 7 greift. Weiterhin ist in Figur 2 zu sehen, daß die Taschen 5, 6 nicht ganz bis zur Unterseite der Aushöhlung 3 reichen. Dadurch läßt sich in der Hohlform 2 ein Schuhboden 11 erzeugen, welcher bis unter die Unterseite der Beriemung 8 reicht. Angedeutet ist in Figur 2 weiterhin eine Oberform 12 der Hohlform 2.

In Figur 3 ist von der Seite her zu sehen, wie der Halterahmen 9 über das Seitenteil 7 greift. Das Seitenteil 7 wird gegen ein Ausweichen nach oben während des Ausschäumens durch einen Vorsprung 13 der Unterform 1 gesichert. Zusätzlich greift ein Klemmstück 14 geringfügig über das Seitenteil 7.

Bei der Herstellung einer Sandale legt man zunächst in die Taschen 5, 6 der Aushöhlungen 3, 4 jeweils ein Seitenteil 7. Dann füllt man die erforderliche Kunststoffmenge in die Unterform 1 und schließt danach die Hohlform mittels der Oberform 12. Der ausschäumende Kunststoff verbindet dann die Seitenteile 7 zuverlässig mit dem entstehenden Schuhboden 11. Als Werkstoff für den Schuhboden 11 verwendet man üblicherweise Polyurethan. Bei der Beriemung 8 ist darauf zu achten, daß sie durch das ausschäumende Material fest mit dem Schuhboden 11 verbunden wird. Das ist beispielsweise bei einer Beriemung 8 aus Leder, aber auch bei Beriemungen aus Kunststoff oder Gummi der Fall.

### Bezugszeichenliste

- 1: Unterform
- 2: Hohlform
- 3: Aushöhlung
- 4: Aushöhlung
- 5: Tasche
- 6: Tasche
- 7: Seitenteil
- 8: Beriemung
- 9: Halterahmen
- 10: Steg
- 11: Schuhboden
- 12: Oberform
- 13: Vorsprung
- 14: Klemmstück

## Patentansprüche

1. Hohlform zur Herstellung einer einen Schuhboden (11) und eine daran befestigte Beriemung (8) aufweisenden Sandale, wobei die Hohlform (2) zu beiden Seiten der den Schuhboden bildenden Aushöhlung (3, 4) eine seitliche Tasche (5, 6) zur Aufnahme und Fixierung der Beriemung (8) hat und welche Mittel zur Fixierung der Enden der Beriemung (8) in den Taschen (5, 6) aufweist, so daß der in der Hohlform (1) ausschäumende Kunststoff nicht außenseitig hinter die Beriemung (8) gelangt, **dadurch gekennzeichnet**, daß die Taschen (5, 6) in einem geringen Abstand zum Boden der Hohlform (2) enden und einen zumindest an der Unterseite der Beriemung (8) geringfügig über die Kontur der Beriemung (8) greifenden Halterahmen (9) für die Beriemung (8) aufweisen.

## Claims

1. Hollow mould for the manufacture of a sandal comprising a shoe sole (11) and a strap (8) attached thereto, the hollow mould (2) having a lateral pocket (5, 6) to receive and fix the strap (8) on either side of the cavity (3, 4) for forming the sole and being provided with means for fixing the ends of the strap (8) in the pockets (5, 6) so that the plastic material foamed in the hollow mould (1) does not escape behind the strap (8), characterized in that the pockets (5, 6) terminate a short distance from the bottom of the hollow mould (2) and have a holding frame (9) for the strap (8) slightly overlapping the contour of the strap (8), at least at the underside of the strap (8).

## Revendications

1. Moule creux pour la fabrication d'une sandale présentant un fond de chaussure (11) et un ensemble de sangles (8) fixé à ce fond, le moule creux (2) présentant, sur les deux côtés de l'évidement (3, 4) qui moule le fond de chaussure, une poche latérale (5, 6) destinée à recevoir et à immobiliser les extrémités des sangles (8) dans les poches (5, 6) de telle manière que la matière plastique qui gonfle en mousse dans le moule creux (1) ne s'infiltre pas extérieurement derrière l'ensemble de sangles (8), caractérisé en ce que les poches (5, 6) se terminent à une petite distance du fond du moule creux (2) et présentent un encadrement de retenue (9) pour l'ensemble de sangles (8), qui emboîte légèrement le contour de l'ensemble de sangles (8) au moins au niveau du côté inférieur de l'ensemble de sangles (8).
